# EUROPÄISCHE PATENTSCHRIFT

(11) **EP 0 945 624 B1**
(45) Veröffentlichungstag und Bekanntmachung des Hinweises auf die Patenterteilung: **31.07.2002**
(21) Anmeldenummer: 99890089.8
(22) Anmeldetag: 11.03.1999
(51) Int. Cl.: F04D 29/12, F04D 29/04, F04D 13/02, F04D 29/42

(54) **KÜHLMITTELPUMPE**
COOLANT PUMP
POMPE POUR LIQUIDE DE REFROIDISSEMENT

(30) Priorität: 26.03.1998 AT 53898
(43) Veröffentlichungstag der Anmeldung: 29.09.1999
(73) Patentinhaber: TCG UNITECH Aktiengesellschaft, 4560 Kirchdorf/Krems (AT)
(72) Erfinder: Heer, Siegfried, Ing., 4560 Kirchdorf/Krems (AT)
(74) Vertreter: Babeluk, Michael, Dipl.-Ing. Mag.

(56) Entgegenhaltungen:
- DE-A- 2 626 875
- DE-C- 4 100 507
- FR-A- 989 105
- GB-A- 1 400 620
- US-A- 2 028 360
- US-A- 4 911 610
- US-A- 5 026 253
- US-A- 5 224 823

## Beschreibung

Die vorliegende Erfindung betrifft eine Kühlmittelpumpe, insbesonders für Brennkraftmaschinen mit innerer Verbrennung gemäß dem Oberbegriff des Patentanspruches 1.

Herkömmliche Kühlmittelpumpen für Kraftfahrzeuge werden üblicherweise über eine Riemenscheibe angetrieben. Der Antrieb erfolgt dabei über einen Riemen, der von einer entsprechenden weiteren Riemenscheibe an der Kurbelwelle der Brennkraftmaschine bewegt wird. Eine solche Kühlmittelpumpe ist dabei so aufgebaut, dass die Riemenscheibe an einem Ende einer Pumpenwelle verkeilt ist, die in ihrem mittleren Abschnitt im Gehäuse der Pumpe gelagert ist. Am gegenüberliegenden Ende der Welle ist ein Laufrad angeordnet, das üblicherweise axial angeströmt wird und dessen Ausströmung in radialer Richtung erfolgt. Um den Austritt des geförderten Kühlmittels zu verhindern, ist dabei zwischen dem Laufrad und den Lagern eine Dichtung angeordnet, die üblicherweise als Gleitringdichtung ausgebildet ist. Eine solche Wasserpumpe besitzt in Axialrichtung aufgrund der einzelnen Bauteile, die auf der Pumpenwelle anzuordnen sind, eine gewisse Mindestabmessung. Der verfügbare Einbauraum in modernen Kraftfahrzeugen wird jedoch immer kleiner, so dass der Bedarf besteht, die Kühlmittelpumpe kompakter auszuführen. Bei dem herkömmlichen Aufbau einer Kühlmittelpumpe sind dabei jedoch Grenzen gesetzt, da die einzelnen Bauteile aufgrund der zulässigen Belastungswerte nicht beliebig klein ausgeführt werden können.

Es besteht daher das Bedürfnis, eine Kühlmittelpumpe zu schaffen, bei der unter sonst gleichen Voraussetzungen der notwendige Einbauraum wesentlich verkleinert werden kann. Insbesonders soll die Abmessung in Axialrichtung wesentlich verringert werden.

Aus der FR-A 989 105 ist eine Kühlwasserpumpe bekannt, bei der der Innenring des Wälzlagers fest mit dem Gehäuse verbunden ist, und dass der Außenring des Wälzlagers im Wesentlichen an der Riemenscheibe befestigt ist. Vorteilhaft ist dabei, dass der Bauraum innerhalb der Riemenscheibe zum Antrieb der Kühlmittelpumpe für die Aufnahme anderer Bauteile genutzt wird. Auf diese Weise kann eine äußerst kompakte Ausführung der Kühlmittelpumpe erreicht werden. Ähnliche Lösungen sind in der DE-A 26 26 875, der US-A 4,911.610 oder der US-A 2,028.360 geoffenbart.

Die GB 1 400 620 A zeigt eine Kühlmittelpumpe, die in der Riemenscheibe Ausnehmungen aufweist, um den Austritt von Flüssigkeit zu ermöglichen, die durch die Dichtung hindurchgetreten ist. Die Leckageflüssigkeit ist dabei stets außen sichtbar, was im KFZ-Bereich unerwünscht ist.

Es hat sich jedoch herausgestellt, dass auch bei sorgfältigster Ausführung der Dichtungen eine gewisse Leckage nie völlig ausgeschlossen werden kann. Um eine Schädigung von Lagern oder anderen Bauteilen der Kühlmittelpumpe durch das austretende Kühlmedium zu vermeiden muss dafür gesorgt werden, dass eine geringfügige Leckagemenge entsorgt werden kann. Dabei ist es insbesonders wünschenswert, wenn dies ohne äußerlich sichtbare Flüssigkeitsspuren möglich ist. Es ist bekannt, zu einem solchen Zweck sogenannte Leckageräume zu schaffen, die eine gewisse Kühlmittelmenge aufnehmen können und die zur Umgebung hin offen sind, so dass die Leckagemenge über einen längeren Zeitraum hinweg verdampfen kann. Herkömmliche Leckageräume tragen jedoch wieder zur Vergrößerung des erforderlichen Bauraumes bei, was aus den obigen Gründen unerwünscht ist.

Aufgabe der vorliegenden Erfindung ist es, diese Nachteile zu vermeiden und eine Kühlmittelpumpe zu schaffen, die bei sicherer Funktion einen äußerst geringen Bauraum beansprucht. Diese Aufgaben werden durch die Merkmale des kennzeichnenden Teiles vom Patentanspruch 1 gelöst.

Durch die erfindungsgemäße Ausbildung ist es möglich, ohne Vergrößerung der Längsabmessungen der Kühlmittelpumpe einen großen Leckageraum vorzusehen, so dass ein sicherer Betrieb ohne Schädigung der Wälzlager möglich ist. Auch dann, wenn sich durch Verschleiß die Leckagemenge nach einer längeren Betriebszeit erhöht hat, kann das sichtbare Austreten von Kühlmedium zuverlässig verhindert werden.

Ein besonderer Vorteil der Erfindung besteht darin, dass das Wälzlager zur Lagerung der Pumpenwelle und der Riemenscheibe einen relativ großen Durchmesser aufweist, so dass eine besonders große Lebensdauer erreicht werden kann. Eine weitere Eigenheit der Erfindung ist, dass das Wälzlager die Welle nicht direkt lagert, sondern über die Riemenscheibe. Da die Riemenkraft die größte Belastung darstellt, wird eine günstige Krafteinleitung erreicht.

Konstruktiv besonders günstig ist es, wenn der Innenring des Wälzlagers an einem im Wesentlichen zylindrischen Vorsprung des Gehäuses befestigt ist, der entgegengesetzt zur Anströmrichtung des Pumpenlaufrades vom Gehäuse vorsteht. Dadurch wird eine steife Bauweise erreicht.

Eine besonders platzsparende Ausführung der Erfindung kann weiters dadurch erreicht werden, dass die Riemenscheibe eine Befestigungsnabe aufweist, mit der die Pumpenwelle fest verbunden ist, und dass sich diese Befestigungsnabe im Wesentlichen innerhalb des Wälzlagers erstreckt.

Grundsätzlich ist es möglich, ein einzelnes Wälzlager zur Lagerung der Antriebswelle vorzusehen, das neben den auftretenden Radialkräften auch in einem gewissen Ausmaß Axialbelastungen aufnehmen kann. Eine Verringerung der Belastung der Wälzlager kann jedoch dadurch erreicht werden, dass zwei Wälzlager unmittelbar nebeneinander vorgesehen sind.

Die konstruktiven Freiheitsgrade bei der Ausbildung des erfindungsgemäßen Wälzlagers können weiters dadurch vergrößert werden, dass zwischen der Befestigungsnabe der Riemenscheibe und dem Laufrad eine Gleitringdichtung vorgesehen ist, deren Außendurchmesser vorzugsweise kleiner ist als der Innendurchmesser des Wälzlagers.

Eine optimale Platzausnützung ergibt sich dann, wenn die Riemenscheibe unmittelbar neben dem Druckraum der Pumpe angeordnet ist. Auf diese Weise wird der in Axialrichtung zur Verfügung stehende Raum optimal ausgenützt.

Eine konstruktiv besonders begünstigte Ausführungsvariante der Erfindung ist dadurch gegeben, dass die Riemenscheibe eine Schulter, an der der Außenring des Wälzlagers befestigt ist, einen Scheibenabschnitt innerhalb der Schulter, der der Seite des Laufrades gegenüberliegend ist, und einen Nabenabschnitt aufweist, der zum Laufrad der Pumpe hin gerichtet ist. Ein besonderer Vorteil dieser Ausführung besteht darin, dass das Wälzlager durch den Druck, der vom Riemen auf die Riemenscheibe in Radialrichtung ausgeübt wird, im Wesentlichen nur in Radialrichtung belastet wird. Im Gegensatz dazu verursacht der Druck des Riemens auf die Riemenscheibe bei der herkömmlichen Kühlmittelpumpe ein Kippmoment, das die Wälzlager zusätzlich belastet.

In der Folge wird die vorliegende Erfindung anhand des in den Figuren dargestellten Ausführungsbeispiels näher erläutert.

Es zeigen:

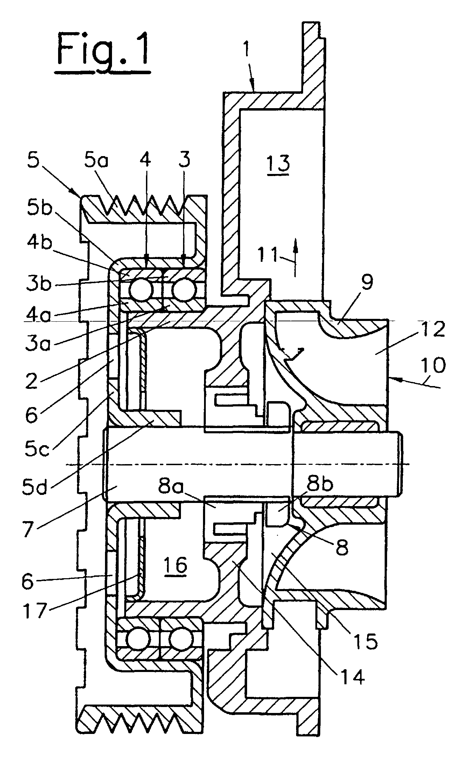

Fig. 1 einen teilweisen Schnitt durch ein erfindungsgemäße Kühlmittelpumpe und

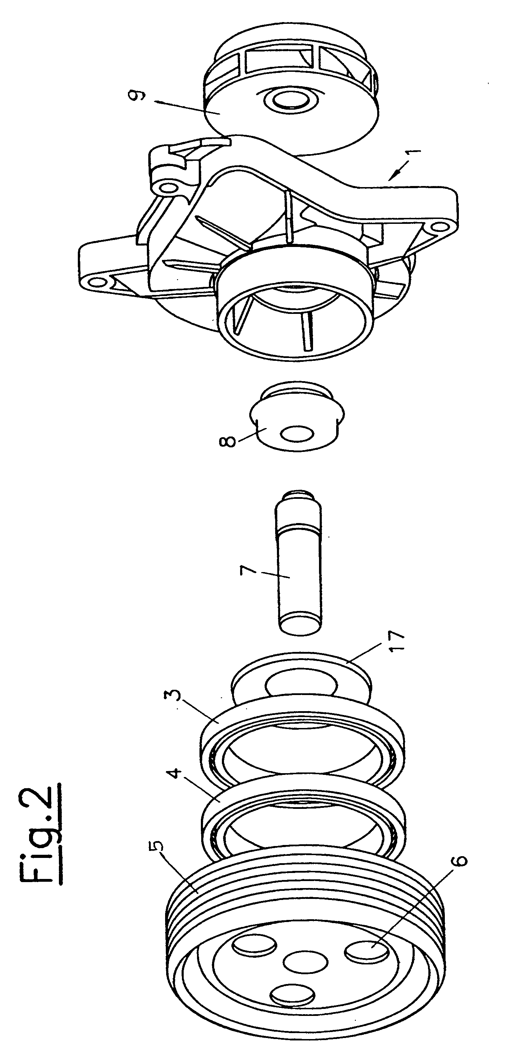

Fig. 2 eine Explosionsdarstellung der Pumpe von Fig. 1.

Die erfindungsgemäße Kühlmittelpumpe besitzt ein Gehäuse 1, das in an sich bekannter Weise durch einen nicht dargestellten Deckel verschlossen ist. Das Gehäuse 1 besitzt einen zylindrischen Vorsprung 2, an dem die Innenringe 3a, 4a von zwei Wälzlagern 3, 4 befestigt werden. Die Außenringe 3b, 4b der Wälzlager 3, 4 tragen eine Riemenscheibe 5 zum Antrieb der Kühlmittelpumpe. Die Riemenscheibe 5 ist dann im äußeren Umfang in an sich bekannter Weise mit einer Lauffläche 5a der Aufnahme eines nicht dargestellten Riemens versehen. Unterhalb dieser Lauffläche 5a ist eine Schulter 5b abgeordnet, an der die Außenringe 3b, 4b der Wälzlager 3, 4 befestigt sind. Die Wälzlager 3, 4 werden in Axialrichtung durch nicht dargestellte Sicherungsringe gehalten. Von der Schulter 5b in Radialrichtung nach innen ist ein Scheibenabschnitt 5c ausgebildet, der eine Mehrzahl von Öffnungen 6 besitzt. An den Scheibenabschnitt 5c schließt ein Nabenabschnitt 5d an, an dem eine Pumpenwelle 7 aufgekeilt ist. Die Riemenscheibe 5 ist aus einem Gussteil einstückig hergestellt.

Anschließend an den Nabenabschnitt 5d ist an der Pumpenwelle 7 eine Gleitringdichtung 8 vorgesehen, die in an sich bekannter Weise als Axialgleitringdichtung ausgebildet ist. Die Gleitringdichtung 8 besteht aus einem stationären Bauteil 8a und einem sich mit der Pumpenwelle 7 drehenden Bauteil 8b. Anschließend an die Gleitringdichtung 8 ist ein Pumpenlaufrad 9 an der Pumpenwelle 7 befestigt, das das Kühlmittel in der Richtung des Pfeils 10 ansaugt und in der Richtung des Pfeils 11 ausstößt. Durch den nicht dargestellten Pumpendeckel wird in an sich bekannter Weise der Saugraum 12 und der Druckraum 13 der Pumpe geschlossen.

Der stationäre Teil 8a der Gleitringdichtung 8 ist an einem nach innen ragenden Flansch 14 des Gehäuses 1 befestigt. Durch die Gleitringdichtung 8 wird verhindert, dass das Kühlmittel von dem Dichtungsraum 15 in den dahinter angeordneten Leckageraum 16 eindringt. Speziell nach einem Stillstand der Kühlmitteipumpe kann jedoch ein Eindringen geringer Mengen des Kühlmittels in den Leckageraum 16 nicht vollständig verhindert werden. Durch ein im Wesentlichen ringförmig ausgebildetes Blech 17, das an dem Ende des zylindrischen Vorsprungs 2 befestigt ist, kann im unteren Bereich des Leckageraumes 16 eine wannenartige Ausbildung erzielt werden, die eine gewisse Kühlmittelmenge aufnehmen kann, ohne dass diese zu den Wälzlagern 3, 4 gelangen kann. Während des Betriebs der Kühlmittelpumpe kann das sich im Leckageraum 16 befindliche Kühlmittel verdampfen und der Dampf kann durch die Öffnungen 6 in dem Scheibenabschnitt 5c der Riemenscheibe 5 austreten.

Die Wälzlager 3, 4 sind in der vorliegenden Ausführungsvariante als Radialkugellager ausgebildet, die durch die Kraft, die von dem nicht dargestellten Riemen auf die Riemenscheibe 5 ausgeübt wird, im Wesentlichen nur in Radialrichtung belastet werden. Dadurch, und aufgrund der Tatsache, dass die Wälzlager 3, 4 einen besonders großen Durchmesser aufweisen, kann eine lange Lebensdauer bei relativ kleinen Abmessungen erreicht werden.

Auch der Zusammenbau der erfindungsgemäßen Kühlmittelpumpe ist in einfacher Weise möglich. Auf den zylindrischen Vorsprung 2 des Gehäuses 1 werden die Wälzlager 3 und 4 aufgeschoben und in Axialrichtung entsprechend gesichert. Dann wird die Riemenscheibe 5 mit der daran befestigten Pumpenwelle 7 auf die Außenringe 3b, 4b der Wälzlager 3, 4 aufgeschoben und ebenfalls durch einen entsprechenden Seegerring od. dgl. gesichert. Nun können auf die Pumpenwelle 7 die Gleitringdichtung 8 und das Pumpenlaufrad 9 aufgezogen werden. Durch das Anbringen des nicht dargestellten Pumpendeckels ist der Zusammenbauvorgang beendet.

Die erfindungsgemäße Ausbildung der Kühlmittelpumpe ermöglicht eine besonders platzsparende Ausbildung, wobei in Axialrichtungen Gesamtabmessungen von 50 mm und weniger erreichbar sind.

## Patentansprüche

1. Kühlmittelpumpe, insbesonders für Brennkraftmaschinen mit innerer Verbrennung, mit einer Pumpenwelle (7), auf der ein Laufrad (9) mit im Wesentlichen axialer Anströmung und mit radialem Ausstoß befestigt ist, und mit einem Gehäuse (1), an dem mindestens ein Wälzlager (3, 4) zur Lagerung der Pumpenwelle (7) vorgesehen ist, sowie mit einer Riemenscheibe (5) zum Antrieb der Pumpe, wobei der Innenring (3a, 4a) des Wälzlagers (3, 4) fest mit dem Gehäuse (1) verbunden ist, und wobei der Außenring (3b, 4b) des Wälzlagers (3, 4) an der Riemenscheibe (5) befestigt ist, **dadurch gekennzeichnet, dass** zur Aufnahme einer gewissen Kühlmittelmenge innerhalb der Riemenscheibe (5) ein Leckageraum (16) ausgebildet ist, der sich im Wesentlichen zwischen einem Träger (2) für den Innenring (3a, 4a) des Wälzlagers (3, 4) und der Pumpenwelle (7) erstreckt.

2. Kühlmittelpumpe nach Anspruch **1**, **dadurch gekennzeichnet, dass** der Innenring (3a, 4a) des Wälzlagers (3, 4) an einem im Wesentlichen zylindrischen Vorsprung (2) des Gehäuses (1) befestigt ist, der auf der dem Laufrad (9) gegenüber liegenden Seite vom Gehäuse (1) vorsteht.

3. Kühlmittelpumpe nach einem der Ansprüche 1 oder 2, **dadurch gekennzeichnet, dass** die Riemenscheibe (5) eine Befestigungsnabe (5d) aufweist, mit der die Pumpenwelle (7) fest verbunden ist, und dass sich diese Befestigungsnabe (5d) im Wesentlichen innerhalb des Wälzlagers (3, 4) erstreckt.

4. Kühlmittelpumpe nach einem der Ansprüche 1 bis 3, **dadurch gekennzeichnet, dass** zwei Wälzlager (3, 4) unmittelbar nebeneinander vorgesehen sind.

5. Kühlmittelpumpe nach einem der Ansprüche 1 bis 4, **dadurch gekennzeichnet, dass** das Wälzlager (3, 4) in einem Raum innerhalb einer Lauffläche (5a) der Riemenscheibe (5) angeordnet ist.

6. Kühimittelpumpe nach einem der Ansprüche 1 bis 5, **dadurch gekennzeichnet, dass** zwischen der Befestigungsnabe (5d) der Riemenscheibe (5) und dem Laufrad (9) eine Gleitringdichtung (8) vorgesehen ist, deren Außendurchmesser vorzugsweise kleiner ist als der Innendurchmesser des Wälzlagers (3, 4).

7. Kühimittelpumpe nach einem der Ansprüche 1 bis 6, **dadurch gekennzeichnet, dass** die Riemenscheibe (5) unmittelbar neben dem Druckraum der Pumpe angeordnet ist.

8. Kühlmittelpumpe nach einem der Ansprüche 1 bis 7, **dadurch gekennzeichnet, dass** die Riemenscheibe (5) eine Schulter (5b), an der der Außenring (3b, 4b) des Wälzlagers (3, 4) befestigt ist, einen Scheibenabschnitt (5c) innerhalb der Schulter, der der Seite des Laufrades (9) gegenüberliegend ist und einen Nabenabschnitt (5d) aufweist, der zum Laufrad (9) der Pumpe hin gerichtet ist.

9. Kühlmittelpumpe nach Anspruch 8, **dadurch gekennzeichnet, dass** der Scheibenabschnitt (5c) Öffnungen (6) aufweist.

10. Kühlmittelpumpe nach einem der Ansprüche 1 bis 9, **dadurch gekennzeichnet, dass** innerhalb des Leckageraumes (16) ein Trennblech (17) vorgesehen ist, das an einem zylindrischen Vorsprung (2) des Gehäuses (1) angebracht ist.

11. Kühlmittelpumpe nach Anspruch 10, **dadurch gekennzeichnet, dass** der stationäre Teil (8a) der Gleitringdichtung (8) auf einem nach innen vorstehenden Flansch (14) des Gehäuses (1) gelagert ist, und dass dieser Flansch (14) zusammen mit dem Trennblech (17) eine Wanne zur Aufnahme von Leckwasser bildet, das durch die Gleitringdichtung (8) hindurchtritt.

## Claims

1. Coolant pump, in particular for use with internal combustion engines, with a pump shaft (7) carrying an impeller (9) with substantially axial intake and radial discharge, and a casing (1) provided with at least one roller bearing (3, 4) supporting the pump shaft (7), and a pulley (5) for driving the pump, the inner race (3a, 4a) of the roller bearing (3, 4) being firmly connected to the casing (1), and the outer race (3b, 4b) of the roller bearing (3, 4) being attached to the pulley 5, **characterized in that** a leakage chamber (16) for the purpose of holding a certain amount of coolant is formed on the inside of the pulley (5), which chamber extends essentially between a projection (2) carrying the inner race (3a, 4a) of the roller bearing (3, 4), and the pump shaft (7).

2. Coolant pump according to claim 1, **characterized in that** the inner race (3a, 4a) of the roller bearing (3, 4) is attached to an essentially cylindrical projection (2) of the casing (1), which projects from the casing (1) on the opposite side of the impeller (9).

3. Coolant pump according to claim 1 or 2, **characterized in that** the pulley (5) is provided with a mounting hub (5d) to which the pump shaft (7) is firmly attached, and that said hub (5d) extends essentially on the inside of the roller bearing (3, 4).

4. Coolant pump according to any of claims 1 to 3, **characterized in that** two roller bearings (3, 4) are provided side by side.

5. Coolant pump according to any of claims 1 to 4, **characterized in that** the roller bearing (3, 4) is located in a space inside a bearing surface (5a) of the pulley (5).

6. Coolant pump according to any of claims 1 to 5, **characterized in that** a shaft seal (8) is provided between the mounting hub (5d) of the pulley (5) and the impeller (9), whose outer diameter preferably is smaller than the inner diameter of the roller bearing (3, 4).

7. Coolant pump according to any of claims 1 to 6, **characterized in that** the pulley (5) is located directly adjacent to the pressure chamber of the pump.

8. Coolant pump according to any of claims 1 to 7, **characterized in that** the pulley (5) includes a shoulder (5b) to which is attached the outer race (3b, 4b) of the roller bearing (3, 4), and a disk (5c) on the inside of said shoulder, which disk (5c) is located on the opposite side of the impeller (9) and carries a hub (5d) extending towards the impeller (9) of the pump.

9. Coolant pump according to claim 8, **characterized in that** the disk (5c) has openings (6).

10. Coolant pump according to any of claims 1 to 9, **characterized in that** a sheet-metal separating ring (17) is provided inside the leakage chamber (16), which is attached to a cylindrical projection (2) of the casing (1).

11. Coolant pump according to claim 10, **characterized in that** the stationary element (8a) of the shaft seal (8) is supported on an inwardly projecting flange (14) of the casing (1), and that said flange (14) and the separating ring (17) together form a sump, which will receive an amount of leaking water penetrating through the shaft seal (8).

## Revendications

1. Pompe d'agent de refroidissement, notamment pour moteur à combustion interne comprenant :
- un arbre de pompe (7), sur lequel est montée une roue à aubes (9) essentiellement à entrée axiale et sortie radiale,
- un boîtier (1) dans lequel est logé au moins un palier à rouleaux (3, 4) pour porter l'arbre de pompe (7), ainsi qu'
- une poulie à courroie (5) pour entraîner la pompe, la bague interne (3a, 4a) du roulement à rouleaux (3, 4) étant solidaire du boîtier (1) tandis que la bague externe (3b, 4b) du roulement à rouleaux (3, 4) est fixée à la poulie à courroie (5)
**caractérisée en ce que**
pour accueillir une certaine quantité de l'agent de refroidissement, il est prévu à l'intérieur de la poulie à courroie (5) une chambre de fuite (16) s'étendant essentiellement entre un support (2) de la bague interne (3a, 4a) du roulement à rouleaux (3, 4) et l'arbre de pompe (7).

2. Pompe selon la revendication 1,
**caractérisée en ce que**
la bague interne (3a, 4a) du palier à rouleaux (3, 4) est fixée sur une saillie (2) essentiellement cylindrique du boîtier (1), dépassant celui-ci du côté éloigné de la roue à aubes (9).

3. Pompe selon l'une quelconque des revendications 1 ou 2,
**caractérisée en ce que**
la poulie à courroie (5) présente un moyeu de fixation (5d) solidaire de l'arbre de pompe (7), ce moyeu (5d) s'étendant essentiellement à l'intérieur du palier à rouleaux (3, 4).

4. Pompe selon l'une quelconque des revendications 1 à 3,
**caractérisée en ce que**
deux paliers à rouleaux (3, 4) sont prévus directement l'un à côté de l'autre.

5. Pompe selon l'une quelconque des revendications 1 à 4,
**caractérisée en ce que**
le palier à rouleaux (3, 4) est monté dans un espace situé à l'intérieur d'une portée de circulation (5a) de la poulie à courroie (5).

6. Pompe selon l'une quelconque des revendications 1 à 5,
**caractérisée en ce qu'**
entre le moyeu de fixation (5d) de la poulie à courroie (5) et la roue à aubes (9) est prévu un joint glissant d'étanchéité (8), dont le diamètre externe est de préférence inférieur au diamètre interne du roulement à rouleaux (3, 4).

7. Pompe selon l'une quelconque des revendications 1 à 6,
**caractérisée en ce que**
la poulie à courroie (5) est montée directement à côté de la chambre de pression de la pompe.

8. Pompe selon l'une quelconque des revendications 1 à 7,
**caractérisée en ce que**
la poulie à courroie (9) présente un épaulement (5b) sur lequel est fixée la bague externe (3b, 4b) du roulement à rouleaux (3, 4) et à l'intérieur de l'épaulement, une section en forme de disque (5c) située en regard de la roue à aubes (9) ainsi qu'une section en forme de moyeu (5d) dirigée vers la roue à aubes (9) de la pompe.

9. Pompe selon la revendication 8,
**caractérisée en ce que**
la section en forme de disque (5c) est percée d'ouvertures (6).

10. Pompe selon l'une quelconque des revendications 1 à 8,
**caractérisée en ce qu'**
à l'intérieur de la chambre de fuite (16) une tôle de séparation (17) est montée sur la saillie cylindrique (2) du boîtier.

11. Pompe selon la revendication 10,
**caractérisée en ce que**
la partie fixe (8a) du joint glissant d'étanchéité (8) est montée sur une bride (14) du boîtier (1), faisant saillie vers l'intérieur, et cette bride (14) forme avec la tôle de séparation (17) une cuvette pour accueillir l'eau de fuite ayant traversé le joint d'étanchéité glissant (8).
